Europäisches Patentamt

European Patent Office

Office européen des brevets

(19)

(11) Numéro de publication : **0 333 564 B1**

(12) **FASCICULE DE BREVET EUROPEEN**

(45) Date de publication du fascicule du brevet :
08.07.92 Bulletin 92/28

(51) Int. Cl.⁵ : **B60S 1/08**

(21) Numéro de dépôt : **89400668.3**

(22) Date de dépôt : **10.03.89**

(54) **Dispositif électronique de détection de pluie.**

(30) Priorité : **18.03.88 FR 8803518**

(43) Date de publication de la demande :
**20.09.89 Bulletin 89/38**

(45) Mention de la délivrance du brevet :
**08.07.92 Bulletin 92/28**

(84) Etats contractants désignés :
**DE ES GB IT**

(56) Documents cités :
**EP-A- 0 117 435**
**EP-A- 0 191 639**
**DE-A- 2 010 970**
**DE-A- 2 610 896**
**FR-A- 2 279 303**
**US-A- 4 317 073**

(56) Documents cités :
**PROCEEDINGS OF 30TH ANNUAL CONFE-**
**RENCE OF THE IEEE VEHICULAR TECHNO-**
**LOGY SOCIETY, INTERNATIONAL**
**CONFERENCE ON TRANSPORTATIONELEC-**
**TRONICS, Dearborn, 15-17 septembre 1980,**
**pages 1-7, IEEE, New York, US; K. MITAMURA**
**et al.: "Integrated electronic device forauto-**
**motive time control signals"**
**ELECTRONIQUE INDUSTRIELLE, no. 139,**
**décembre 1970, pages 843-845; "Des conden-**
**sateurs au PTFE métallisé aux performances-**
**supérieures à celles des condensateurs sous**
**vide"**

(73) Titulaire : **REGIE NATIONALE DES USINES**
**RENAULT**
**Boîte postale 103 8-10 avenue Emile Zola**
**F-92109 Boulogne-Billancourt (FR)**

(72) Inventeur : **Bellard, Jean-Pierre**
**12, Allée des Sabliers**
**F-78170 La-Celle-Saint-Cloud (FR)**
Inventeur : **Warenghem, Michel**
**8, avenue de l'Abbé Saint Pierre**
**F-92150 Suresnes (FR)**
Inventeur : **Buot, Jean-Luc**
**47, rue des Pyrénées**
**F-93290 Tremblay-les-Gonesse (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

## Description

La présente invention se rapporte à un dispositif électronique de détection de pluie pour véhicule, non intégré au pare-brise de celui-ci, comprenant un capteur constitué par un support isolant portant, sur sa face exposée à la pluie, deux électrodes en forme de peignes imbriquées l'une dans l'autre et un circuit électronique associé, le support portant les électrodes étant revêtu d'une fine couche de matériau étanche à l'eau ayant des propriétés diélectriques couvrant lesdites électrodes.

La plupart des capteurs utilisés sur les dispositifs de détection de pluie sont de type résistif et rapidement saturés car la présence d'une ou plusieurs gouttes entre les deux électrodes provoque un court-circuit électrique. L'encrassement pourra être aussi une cause de court-circuit. La sensibilité est faible dans la partie utile.

On connaît également des capteurs de détection de pluie de type capacitif. C'est notamment le cas du capteur de pluie décrit dans la publication EP-A-0 191 639. Ce capteur monté sur le pare-brise d'un véhicule, délivre des signaux logiques tout ou rien permettant exclusivement de mettre en route les essuie-glaces ou les faire passer sur leur vitesse rapide.

La présente invention a pour but de fournir un capteur de détection de pluie de type capacitif, non intégré au pare-brise du véhicule, et plus sensible que celui décrit dans la publication EP-A-0 191 639. Conformément à l'invention on met à profit le fait que la capacité est linéairement proportionnelle à la quantité d'eau déposée sur le capteur, pour effectuer électroniquement par dérivation une mesure de la variation de la quantité d'eau. La technologie de ce capteur ne permet pas de court-circuit par encrassement. La vitesse du véhicule agit positivement sur la vitesse de cadencement du véhicule. Le capteur a un fonctionnement normal même lors de chutes de neige grâce à une chauffe intégrée.

Le dispositif selon l'invention est caractérisé par les caractéristiques contenues dans la partie caractérisante de la revendication 1.

Selon un mode de réalisation de l'invention le matériau étanche à plropriétés diélectriques appartient au groupe verre, nylon, téflon, parylène.

Selon un mode de réalisation de l'invention, la liaison entre les électrodes et le circuit électronique s'effectue par des trous métallisés traversant le support et recouverts par la couche de matériau étanche et diélectrique.

Selon un mode de réalisation de l'invention, le circuit électronique associé au capteur est constitué par un oscillateur dans lequel la capacité du capteur est incluse et en pilote directement la période et par des moyens de maintenir le support à température constante.

Différents modes de réalisation de l'invention sont précisés dans les revendications dépendantes.

L'invention va maintenant être décrite avec plus de détails en se référant à un mode de réalisation donné à titre d'exemple et représenté par les dessins annexés sur lesquels :
- la figure 1 est un schéma en vue de dessus du capteur selon l'invention,
- la figure 2 est un graphique illustrant la variation de capacité du capteur en fonction de la quantité d'eau exprimée en nombre de gouttes,
- les figures 3 et 4 illustrent le fonctionnement capacitif du capteur,
- la figure 5 est une vue en élévation d'un mode de réalisation du capteur,
- la figure 6 est une vue de dessous du mode de réalisation de la figure 5,
- la figure 7 illustre un mode de réalisation de capteur,
- la figure 8 est un schéma de l'électronique associée au capteur.

Le dispositif se compose d'un capteur référence 1 dans son ensemble et d'une électronique associée 6.

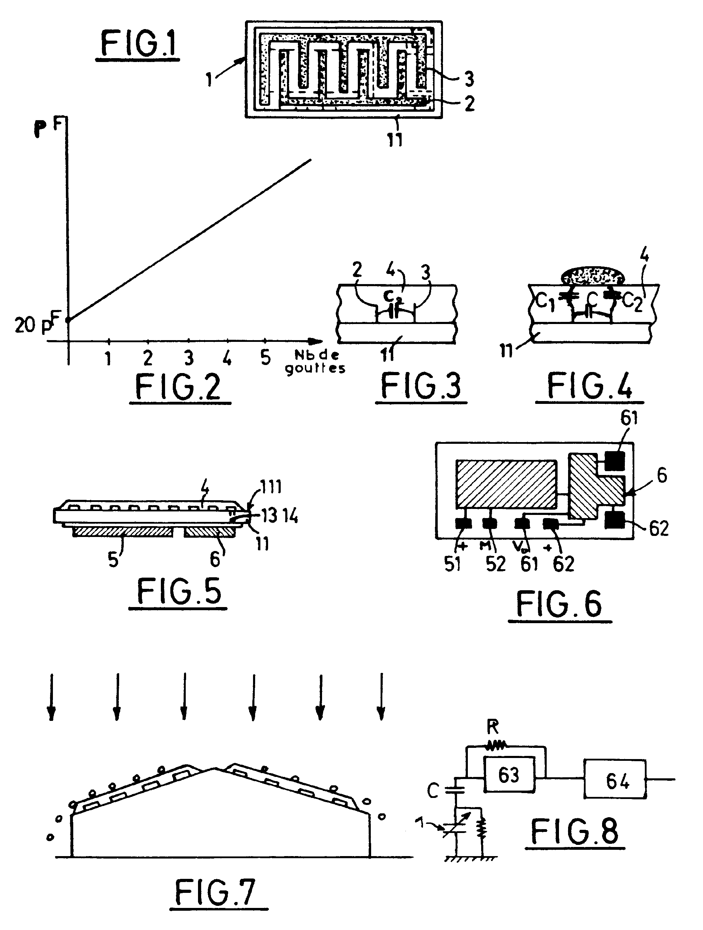

En se référant à la figure 1, le capteur 1 se compose d'un support isolant 11 dont la face extérieure 111 exposé à la pluie supporte deux électrodes métalliques en forme de peignes 2 et 3. Ces deux électrodes sont imbriquées l'une dans l'autre, les raies de ces électrodes étant respectivement alternées.

Les raies des peignes sont suffisamment rapprochées pour détecter une goutte de petite dimension ou le brouillard. A titre indicatif, un espacement de l'ordre de 0,25 mm entre les électrodes 2 et 3 est un bon compromis.

Le support isolant 11 est en céramique, par exemple en alumine ($Al_2O_3$ à 96 %). Les électrodes 2 et 3 sont réalisées par sérigraphie par exemple selon la technologie des couches épaisses.

Le capteur pourrait être réalisé selon la technologie des circuits imprimés durs ou souples, le support étant de type époxy, polyamide, mylar. Le support pourrait être constitué par le verre du pare-brise, les électrodes étant directement déposées sur le verre du pare-brise traversé par des conducteurs.

La face 111 du support 11 est couverte par une fine couche 4 diélectrique de matériau étanche à l'eau ayant des propriétés diélectriques et de préférence non mouillant. Cette couche recouvre entièrement, de manière continue, les électrodes 2 et 3 et le support 11. Elle transforme le capteur un condensateur dont les armatures sont matérialisées par les deux peignes. Cette couche a une épaisseur comprise entre 5 et 100 µm. La constante diélectrique du matériau devra être inférieure à la constante diélectrique de l'eau. En général, une constante diélectrique inférieure ou égale à 10 est suffisante. La couche diélectrique permet de diminuer, voire de rendre presque linéaire, les non-linéarités attribuées habituellement à ce type de capteur.

A titre indicatif, en fonction des dimensions des électrodes 2 et 3, une épaisseur de 20 μm de verre permet de satisfaire la détection des gouttelettes et du brouillard.

Le matériau constituant la couche diélectrique 4 appartient au groupe verre, nylon, téflon, parylène.

Les électrodes 2 et 3 sont connectées à un circuit électronique associé 6 qui traduit les variations de capacité en variation de la période.

Les connexions entre les électrodes 2 et 3 et l'électronique 6 se font par des conducteurs de liaison qui traversent le support dans des trous 13, 14 perçant le support de part en part. Les trous sont recouverts par la couche 4. Le capteur est ainsi complètement isolé par la couche 4.

Du côté de la face 112 , se trouvent les plots d'alimentation et de sortie 61 et 62.

La capacité du capteur est incluse dans un oscillateur 63 de type RC. La fréquence fournie par cet oscillateur est divisée par un circuit logique diviseur de fréquence 64 de manière que le signal soit transporté jusqu'à une carte de traitement. Le signal de fréquence divisée est envoyé à un circuit (par exemple boucle à verrouillage de phase dite PLL), mesurant les variations positives de la période du signal. Un accroissement de la période correspond à une augmentation de la capacité du capteur, donc à un apport d'eau sur le verre.

Un circuit de chauffe 5 est monté sous le support 11. Ce circuit de chauffe est alimenté par des plots 51 et 52. Il comporte une thermistance à coefficient de température positif.

Dans un premier mode de réalisation du circuit de chauffe, la thermistance possède un point de transition thermique à la température souhaitée.

Dans un second mode de réalisation du circuit de chauffe, la thermistance est sérigraphiée ou déposée sur le support 11 et elle est associée à un circuit électronique la maintenant à température constante.

Dans le mode de réalisation des figures 5 et 6, le circuit électronique associé 6 et le circuit de chauffe 5 sont disposés au dos du support isolant 11 du côté protégé de la pluie.

Un premier mode de montage du capteur 1 consiste à le monter avec une inclinaison très proche du pare-brise, si possible du côté conducteur.

Dans un second mode de réalisation, illustré par la figure 7, le capteur se compose de deux demi-capteurs plans et inclinés pourvus chacun d'électrodes et d'une couche diélectrique. Cette disposition en toit favorise l'écoulement de l'eau de chaque côté du capteur. Cette solution pourra être utile dans le cas de pluie venant d'un seul côté du véhicule, un des plans restant sensible à la pluie. Du fait de la position inclinée de la surface de capture et de la vitesse du véhicule, le capteur en cas de pluie normale ne peut jamais se trouver en saturation. Dans le case d'une pluie très forte saturant le capteur, le capacité anormalement élevée donc facilement détectable permet de mettre en fonctionnement automatique le cadencement rapide des essuie-vitres.

Le fonctionnement du dispositif va maintenant être expliqué.

En l'absence de goutte sur le capteur (figure 3), celui-ci se comporte comme un condensateur. Lorsqu'une goutte est déposée (figure 4) sur le capteur, cette goutte modifie la capacité. La constante diélectrique de l'eau est très importante par rapport à celle du matériau 4.

La capacité augmente linéairement en fonction de la quantité d'eau déposée sur le capteur (figure 2).

Grâce au matériau non mouillant et à l'inclinaison du capteur, celui-ci n'est jamais entièrement recouvert d'eau par pluie normale.

Le circuit électronique fournit en sortie de l'oscillateur un signal dont la période est directement proportionnelle à la capacité, c'est-à-dire à la présence d'eau sur le capteur et la variation de période à la grosseur des gouttes. La fréquence du signal est divisée afin de permettre au signal d'être transporté jusqu'à la carte de traitement.

La variation de capacité dépend de la grosseur de la goutte et de son impact sur la couche de protection 4. On peut ainsi distinguer les différentes sortes de pluie et corriger automatiquement, par l'impact écrasant la goutte sur le verre, les variations dues à la vitesse du véhicule et l'intensité de la pluie.

Le circuit de chauffe disposé au dos du capteur met ce capteur à une température au moins égale à celle du pare-brise. Il simule la température interne de l'habitacle influençant directement le pare-brise. Il simule le passage des essuie-vitres évacuant la pluie sur le pare-brise par une évacuation thermique des gouttes sur le capteur. Il permet, dans le cas de pluie fine ou brouillard, d'évacuer l'eau sur le capteur et d'avoir une bonne sensibilité à ces gouttelettes fines. Il permet, dans le cas de neige, de dégivrer le capteur et d'être sensible aux flocons de neige se transformant en eau au contact du capteur.

## Revendications

1. Dispositif électronique de détection de pluie pour véhicule, non intégré au pare-brise de celui-ci, comprenant un capteur (1) constitué par un support isolant (11) portant, sur la face exposée à la pluie, deux électrodes (2, 2) en forme de peignes imbriquées l'une dans l'autre et par un circuit électronique (6) associé, le support (11) portant les électrodes (2, 3) étant revêtu d'une fine couche (4) de matériau étanche à l'eau ayant des propriétés diélectriques couvrant lesdites électrodes, caractérisé d'une part en ce que le circuit électronique associé (6) et le circuit de chauffe (5) sont disposés au dos du support isolant (11) du côté protégé de la pluie, et d'autre part en ce que le circuit électronique (6) associé comporte des moyens de commande capables de porter le capteur (1) à une température au moins égale à celle du pare-brise, un oscillateur mesurant la valeur instantanée de la capacité du capteur (1) et délivrant un signal de période proportionnel à la capacité du capteur, ce signal étant divisé en fréquence avant d'être transmis à une carte de traitement délivrant elle-même par dérivation une information de commande des essuie-glaces représentative de la quantité d'eau reçue par le capteur.

2. Dispositif selon la revendication 2 caractérisé par le fait que la liaison entre les électrodes (2, 3) et le circuit électronique (6) s'effectue par des trous métallisés traversant le support (11) et recouverts par la couche (4) de matériau étanche et diélectrique.

3. Dispositif selon les revendications 1 ou 2 caractérisé par le fait que le circuit de chauffe comporte une thermistance à coefficient de température positif.

4. Dispositif selon l'une quelconque des revendications précédentes, caractérisé par le fait que le capteur (1) est constitué de deux demi-capteurs formant un toit.

5. Dispositif selon l'une quelconque des revendications précédentes, caractérisé par le fait que le support isolant (11) appartient au groupe verre, céramique, époxy, polyimide, mylar.


**Patentansprüche**

1. Elektronische Regen-Erkennungsvorrichtung für Fahrzeuge, die nicht in die Fahrzeugwindschutzscheibe integriert ist, mit einem Fühler (1), der aus einem isolierenden Halter (11) besteht, welcher auf der dem Regen zugewandten Seite zwei Elektroden (2, 2) aufweist, welche die Form ineinandergreifender Kämme aufweisen und der aus einem zugeordneten elektronischen Schaltkreis (6) besteht, wobei der die Elektroden (2, 3) tragende Halter (11) mit einer dünnen, wasserdichten Schicht (4) bedeckt ist, welche dielektrische Eigenschaften aufweist und welche die Elektroden bedeckt, dadurch gekennzeichnet, daß einerseits der zugeordnete elektronische Schaltkreis (6) und ein Heizschaltkreis (5) auf der Rückseite des isolierenden Halters (11) auf der dem Regen abgewandten Seite angeordnet sind, und daß andererseits der zugeordnete elektronische Schaltkreis (6) eine Steueranordnung aufweist, um den Fühler (1) auf eine Temperatur zu bringen, die wenigstens gleich derjenigen der Windschutzscheibe ist, wobei ein Oszillator den Augenblickswert der Kapazität des Fühlers (1) mißt und ein periodisches Signal abgibt proportional zur Kapazität des Fühlers, wobei dieses Signal frequenzgeteilt wird bevor es einer Verarbeitungseinheit zugeführt wird, welche durch Ableitung einen Steuerbefehl für die Scheibenwischer liefert, in Abhängigkeit von der vom Fühler festgestellten Wassermenge.

2. Vorrichtung nach Anspruch 1, dadurch gekennzeichnet, daß die Verbindung zwischen den Elektroden (2, 3) und dem elektronischen Schaltkreis (6) mittels metallisierter Öffnungen erfolgt, welche den Halter (11) durchsetzen und die von der dichten dielektrischen Schicht (4) bedeckt sind.

3. Vorrichtung nach Ansprüchen 1 oder 2, dadurch gekennzeichnet, daß der Heizschaltkreis einen Thermistor mit positivem Temperaturkoeffizienten aufweist.

4. Vorrichtung nach einem der vorhergehenden Ansprüche, dadurch gekennzeichnet, daß der Fühler (1) aus zwei dachförmig angeordneten Halbfühlern besteht.

5. Vorrichtung nach einem der vorhergehenden Ansprüche, dadurch gekennzeichnet, daß der isolierende Halter (11) der Gruppe aus Glas, Keramik, Epoxy, Polyimid und Mylar angehört.


**Claims**

1. An electronic rain detection device for a vehicle, rich is not integrated in the windshield of the vehicle and comprising a sensor (1) formed by an insulating support (11) rich on the face rich is exposed to the rain carries two electrodes (2, 3) rich are in the form of combs and rich are engaged one into each other and an associated electronic circuit (6), the support (11) rich carries the electrodes (2, 3) being covered with a fine layer (4) of water-tight material having dielectric properties covering said electrodes, characterised on the one hand in that the associated electronic circuit (6) and the heating circuit (5) are disposed at the back of the insulating support (11) on the side protected from the rain, and on the other hand in that the associated electronic circuit (6) comprises control means capable of putting the sensor (1) at a temperature rich is at least equal to that of the windshield, an oscillator measuring the instantaneous value of the capacitance of the sensor (1) and delivering a signal of a period rich is proportional to the capacitance of the sensor, said signal being divided in frequency before being transmitted to a processing board rich itself by derivation supplies information for control of the windshield wipers rich is representative of the amount of water received by the sensor.

2. A device according to claim 1 characterised in that the connection between the electrodes (2, 3) and the electronic circuit (6) is made by means of metallised holes rich pass through the support (11) and rich are covered by the layer (4) of sealing and dielectric material.

3. A device according to claim 1 or claim 2 characterised in that the heating circuit comprises a positive temperature coefficient thermistor.

4. A device according to any one of the preceding claims in that the sensor (1) is formed by two half-sensors forming a roof configuration.

5. A device according to any one of the preceding claims characterised in that the insulating support (11) belongs to the group comprising glass, ceramic, epoxy, polyimide and polar.

# FIG.1

1
3
2
11

# FIG.2

pF

20 pF

1 2 3 4 5 Nb de gouttes

# FIG.3

2 4 3
C₂
11

# FIG.4

4
C₁ C C₂
11

# FIG.5

4 111
13 14
5 6 11

# FIG.6

61
6
62
51 52 61 62
+ M V +

# FIG.7

# FIG.8

R
63
C
64
1